# EUROPEAN PATENT APPLICATION

(11) **EP 4 661 576 A1**
(43) Date of publication of application: **10.12.2025**
(21) Application number: 23919015.0
(22) Date of filing: 31.01.2023
(51) Int. Cl.: H04W 72/566

(54) **LOGIC CHANNEL PRIORITY PROCESSING METHOD AND COMMUNICATION APPARATUS**

(71) Applicant: Beijing Xiaomi Mobile Software Co., Ltd., Beijing 100085 (CN)
(72) Inventor: LI, Yanhua, Beijing 100085 (CN); JIANG, Xiaowei, Beijing 100085 (CN)
(74) Representative: Stöckeler, Ferdinand
(86) International application number: PCT/CN2023/074053
(87) International publication number: WO 2024/159435

(57) **Abstract**

Provided in the present disclosure are a logic channel priority processing method and a communication apparatus. The method comprises: when the packing of first data triggered by a first BSR is performed, increasing a logic channel priority of a first logic channel corresponding to the first data, wherein the first BSR is associated with delay information of the first data.

## Description

### TECHNICAL FIELD

The present disclosure relates to the field of wireless communication technology, and specifically to a method for performing logical channel prioritization (LCP) and a communication device.

### BACKGROUND

Extended reality (XR) refers to an environment created using computer technology and wearable devices, which combines visualization of a real world and a virtual world and enables human-computer interaction. XR is a collective term for various technologies such as augmented reality (AR), virtual reality (VR), and mixed reality (MR). Integrating the visual interaction technologies of the AR, VR, and MR technologies provides users with a seamless transition between the virtual world and the real world, creating an "immersive experience".

In a process of implementing an XR service using 5th generation mobile communication technology (5G technology), an access network device configures a logical channel priority. In the 5G technology, a logic channel prioritization (LCP) process is used to prioritize processing of a logical channel carrying an XR service data stream.

However, according to a current LCP process, uplink data is strictly assembled based on the logical channel priority. Therefore, even after user equipment (UE) obtains an uplink grant (uplink grant), data with a lower logical channel priority still may not be transmitted in time, affecting data transmission efficiency.

### SUMMARY

The disclosure provides a method for performing logical channel prioritization (LCP) and a communication device to enhance data transmission efficiency.

In a first aspect, the present disclosure provides a method for performing LCP. The method may be performed by a terminal such as UE. The method may include: when assembly of first data is triggered by a first buffer status report (BSR), raising a logical channel priority of a first logical channel corresponding to the first data, in which the first BSR is associated with delay information of the first data.

In a possible implementation, LCP is performed on the first logical channel according to a raised logical channel priority.

In a possible implementation, the first data is uplink data with an urgent scheduling requirement.

In a possible implementation, the first data is uplink data whose remaining packet delay budget (PDB) is less than a first threshold.

In a possible implementation, the first data is a data packet or a data packet set.

In a possible implementation, raising the logical channel priority of the first logical channel corresponding to the first data includes: raising the logical channel priority of the first logical channel to a maximum priority level; or raising the logical channel priority of the first logical channel to a preset priority level.

In a possible implementation, in response to raising the logical channel priority of the first logical channel to the preset priority level, the method further including: receiving first indication information sent by a network device, in which the first indication information is configured to indicate the preset priority level.

In a possible implementation, the method further includes: receiving a first instruction sent by a network device, in which the first instruction is configured to instruct the terminal to raise the logical channel priority of the first logical channel when transmitting the first data; in which raising the logical channel priority of the first logical channel corresponding to the first data includes: in response to the first instruction, raising the logical channel priority of the first logical channel corresponding to the first data.

In a possible implementation, the first instruction is configured to schedule an uplink grant.

In a possible implementation, the method further includes: in a process of performing the LCP on the first logical channel, not restricting transmission of the first data using a token bucket.

In a possible implementation, the method further includes: maintaining the logical channel priority of the first logical channel at a raised logical channel priority before transmission of the first data is completed.

In a second aspect, the present disclosure provides a method for performing LCP. The method may be performed by a terminal such as UE. The method may include: when assembly of first data is triggered by a first BSR, determining a first logical channel corresponding to the first data, in which the first BSR is associated with delay information of the first data; and prioritizing transmission of the first data of the first logical channel when the LCP is performed on the first logical channel.

In a possible implementation, the first data is uplink data with an urgent scheduling requirement.

In a possible implementation, the first data is uplink data whose remaining PDB is less than a first threshold.

In a possible implementation, the first data is a data packet or a data packet set.

In a possible implementation, prioritizing the transmission of the first data of the first logical channel includes: prioritizing the transmission of the first data of the first logical channel among a plurality of logical channels with the same logical channel priority; or prioritizing the transmission of the first data of the first logical channel among a plurality of logical channels with different logical channel priorities.

In a possible implementation, the method further includes: receiving a second instruction sent by a network device, in which the second instruction is configured to instruct the terminal to prioritize the transmission of the first data of the first logical channel; in which, prioritizing the transmission of the first data of the first logical channel when the LCP is performed on the first logical channel includes: in response to the second instruction, prioritizing the transmission of the first data of the first logical channel when the LCP is performed on the first logical channel.

In a possible implementation, the method further includes: in a process of performing the LCP on the first logical channel, not restricting the transmission of the first data using a token bucket.

In a possible implementation, the method further includes: prioritizing the transmission of the first data of the first logical channel before the transmission of the first data is completed.

In a third aspect, the present disclosure provides a method for performing LCP. The method may be performed by a terminal such as UE. The method may include: when assembly of a first data assembly packet is triggered by a first BSR, not restricting transmission of the first data of a first logical channel using a token bucket.

In a possible implementation, not restricting the transmission of the first data of the first logical channel using the token bucket includes: prioritizing mapping of the first data of the first logical channel to an uplink grant; or updating a value of a prioritized bit rate (PBR) of the first logical channel to infinity; or transmitting the first data until the uplink grant is exhausted.

In a fourth aspect, the present disclosure provides a method for performing LCP. The method may be performed by a network device. The method may include: receiving a first BSR sent by a terminal, in which the first BSR is associated with delay information of first data; and sending a first instruction to the terminal, in which the first instruction is configured to instruct the terminal to raise a logical channel priority of a first logical channel when transmitting the first data.

In a possible implementation, the first data is uplink data with an urgent scheduling requirement.

In a possible implementation, the first data is uplink data whose remaining PDB is less than a first threshold.

In a possible implementation, the first data is a data packet or a data packet set.

In a possible implementation, the first instruction is configured to schedule an uplink grant.

In a possible implementation, the first instruction is configured to instruct the terminal to raise the logical channel priority of the first logical channel to a maximum priority level or a preset priority level when transmitting the first data.

In a possible implementation, in response to the first instruction being configured to instruct the terminal to raise the logical channel priority of the first logical channel to the preset priority level when transmitting the first data, the method further including: sending first indication information to the terminal, in which the first indication information is configured to indicate the preset priority level.

In a fifth aspect, the present disclosure provides a method for performing LCP. The method may be performed by a network device. The method may include: receiving a first BSR sent by a terminal, in which the first BSR is associated with delay information of first data; and sending a second instruction to the terminal, in which the second instruction is configured to instruct the terminal to prioritize transmission of the first data of a first logical channel.

In a possible implementation, the first data is uplink data with an urgent scheduling requirement.

In a possible implementation, the first data is uplink data whose remaining PDB is less than a first threshold.

In a possible implementation, the first data is a data packet or a data packet set.

In a possible implementation, the second instruction is configured to instruct the terminal to prioritize the transmission of the first data of the first logical channel among a plurality of logical channels with the same logical channel priority; or the second instruction is configured to instruct the terminal to prioritize the transmission of the first data of the first logical channel among a plurality of logical channels with different logical channel priorities.

In a sixth aspect, the present disclosure provides a communication device. The communication device may be a terminal in a communication system, or a chip or a system on chip in a terminal, or a functional module configured to implement methods of various embodiments in a terminal. The communication device may realize functions executed by the terminal in the above embodiments. The functions may be realized by executing corresponding software by hardware. The hardware or software includes one or more modules corresponding to the above functions. The communication device includes: a processing module, configured to: when assembly of first data is triggered by a first BSR, raise a logical channel priority of a first logical channel corresponding to the first data, in which the first BSR is associated with delay information of the first data; and perform LCP on the first logical channel according to a raised logical channel priority.

In a possible implementation, the first data is uplink data with an urgent scheduling requirement.

In a possible implementation, the first data is uplink data whose remaining PDB is less than a first threshold.

In a possible implementation, the first data is a data packet or a data packet set.

In a possible implementation, the processing module is configured to: raise the logical channel priority of the first logical channel to a maximum priority level; or raise the logical channel priority of the first logical channel to a preset priority level.

In a possible implementation, in response to raising the logical channel priority of the first logical channel to the preset priority level, the apparatus further includes: a receiving module, configured to receive first indication information sent by a network device, in which the first indication information is configured to indicate the preset priority level.

In a possible implementation, the apparatus further includes: a receiving module, configured to receive a first instruction sent by a network device, in which the first instruction is configured to instruct the terminal to raise the logical channel priority of the first logical channel when transmitting the first data; wherein the processing module is configured to, in response to the first instruction, raise the logical channel priority of the first logical channel corresponding to the first data.

In a possible implementation, the first instruction is configured to schedule an uplink grant.

In a possible implementation, the processing module is configured to, in a process of performing the LCP on the first logical channel, not restrict transmission of the first data using a token bucket.

In a possible implementation, the processing module is configured to maintain the logical channel priority of the first logical channel at a raised logical channel priority before transmission of the first data is completed.

In a seventh aspect, the present disclosure provides a communication device. The communication device may be a terminal in a communication system, or a chip or a system on chip in a terminal, or a functional module configured to implement methods of various embodiments in a terminal. The communication device may realize functions executed by the terminal in the above embodiments. The functions may be realized by executing corresponding software by hardware. The hardware or software includes one or more modules corresponding to the above functions. The communication device includes: a processing module, configured to: when assembly of first data is triggered by a first BSR, determine a first logical channel corresponding to the first data, in which the first BSR is associated with delay information of the first data; and when LCP is performed on the first logical channel, prioritize transmission of the first data of the first logical channel.

In a possible implementation, the first data is uplink data with an urgent scheduling requirement.

In a possible implementation, the first data is uplink data whose remaining PDB is less than a first threshold.

In a possible implementation, the first data is a data packet or a data packet set.

In a possible implementation, the processing module is configured to: prioritize the transmission of the first data of the first logical channel among a plurality of logical channels with the same logical channel priority; or prioritize the transmission of the first data of the first logical channel among a plurality of logical channels with different logical channel priorities.

In a possible implementation, the apparatus further includes: a receiving module, configured to receive a second instruction sent by a network device, in which the second instruction is configured to instruct the terminal to prioritize the transmission of the first data of the first logical channel; wherein the processing module is configured to, in response to the second instruction, prioritize the transmission of the first data of the first logical channel when the LCP is performed on the first logical channel.

In a possible implementation, the processing module is configured to: in a process of performing the LCP on the first logical channel, not restrict transmission of the first data using a token bucket.

In a possible implementation, the processing module is configured to: prioritize the transmission of the first data of the first logical channel before the transmission of the first data is completed.

In an eighth aspect, the present disclosure provides a communication device. The communication device may be a terminal in a communication system, or a chip or a system on chip in a terminal, or a functional module configured to implement methods of various embodiments in a terminal. The communication device may realize functions executed by the terminal in the above embodiments. The functions may be realized by executing corresponding software by hardware. The hardware or software includes one or more modules corresponding to the above functions. The communication device includes: a processing module, configured to: when assembly of a first data assembly packet is triggered by a first BSR, not restrict transmission of the first data of a first logical channel using a token bucket.

In a possible implementation, the processing module is configured to: prioritize mapping of the first data of the first logical channel to an uplink grant; or update a value of a PBR of the first logical channel to infinity; or transmit the first data until the uplink grant is exhausted.

In a ninth aspect, the present disclosure provides a communication device. The communication device may be a network device in a communication system, or a chip or a system on chip in a network device, or a functional module configured to implement methods of various embodiments in a network device. The communication device may realize functions executed by the network device in the above embodiments. The functions may be realized by executing corresponding software by hardware. The hardware or software includes one or more modules corresponding to the above functions. The communication device includes: a receiving module, configured to receive a first BSR sent by a terminal, in which the first BSR is associated with delay information of first data; and a sending module, configured to send a first instruction to the terminal, in which the first instruction is configured to instruct the terminal to raise a logical channel priority of a first logical channel when transmitting the first data.

In a possible implementation, the first data is uplink data with an urgent scheduling requirement.

In a possible implementation, the first data is uplink data whose remaining PDB is less than a first threshold.

In a possible implementation, the first data is a data packet or a data packet set.

In a possible implementation, the first instruction is configured to schedule an uplink grant.

In a possible implementation, the first instruction is configured to instruct the terminal to raise the logical channel priority of the first logical channel to a maximum priority level or a preset priority level when transmitting the first data.

In a possible implementation, in response to the first instruction being configured to instruct the terminal to raise the logical channel priority of the first logical channel to the preset priority level when transmitting the first data, the sending module is configured to send first indication information to the terminal, in which the first indication information is configured to indicate the preset priority level.

In a tenth aspect, the present disclosure provides a communication device. The communication device may be a network device in a communication system, or a chip or a system on chip in a network device, or a functional module configured to implement methods of various embodiments in a network device. The communication device may realize functions executed by the network device in the above embodiments. The functions may be realized by executing corresponding software by hardware. The hardware or software includes one or more modules corresponding to the above functions. The communication device includes: a receiving module, configured to receive a first BSR sent by a terminal, in which the first BSR is associated with delay information of first data; and a sending module, configured to send a second instruction to the terminal, in which the second instruction is configured to instruct the terminal to prioritize transmission of the first data of a first logical channel.

In a possible implementation, the first data is uplink data with an urgent scheduling requirement.

In a possible implementation, the first data is uplink data whose remaining PDB is less than a first threshold.

In a possible implementation, the first data is a data packet or a data packet set.

In a possible implementation, the second instruction is configured to instruct the terminal to prioritize the transmission of the first data of the first logical channel among a plurality of logical channels with the same logical channel priority; or the second instruction is configured to instruct the terminal to prioritize the transmission of the first data of the first logical channel among a plurality of logical channels with different logical channel priorities.

In an eleventh aspect, the present disclosure also provides a communication device, such as a terminal. The communication device includes a memory and a processor. The memory is configured to store computer-executable instructions. The processor is configured to execute the computer-executable instructions stored in the memory, to implement any one of methods for performing LCP in the first aspect to the third aspect and possible implementations thereof.

In a twelfth aspect, the present disclosure also provides a communication device, such as a network device. The communication device includes a memory and a processor. The memory is configured to store computer-executable instructions. The processor is configured to execute the computer-executable instructions stored in the memory, to implement any one of methods for performing LCP in the fourth aspect to the fifth aspect and possible implementations thereof.

In a thirteenth aspect, the present disclosure also provides a computer storage medium for storing computer-executable instructions. When the computer-executable instructions are executed by a processor of a communication device, any one of methods for performing LCP in the first aspect to the fifth aspect and possible implementations is implemented.

According to the method for performing LCP in the present disclosure, when assembly of the first data is triggered by the first BSR associated with delay information of the first data having a scheduling requirement, by changing a transmission sequence of the first data of the first logical channel, the first data is enabled to be transmitted prior to part or all data, thereby the first data can be transmitted in time and data transmission efficiency is improved.

It may be understood that the sixth aspect to the thirteenth aspect of the present disclosure are consistent with technical solutions of the first aspect to the fifth aspect of the present disclosure. Beneficial effects achieved by each aspect and corresponding feasible implementations are similar, and will not be repeated here.

### BRIEF DESCRIPTION OF THE DRAWINGS

FIG. 1 is a schematic diagram of a scenario realizing an extended reality (XR) service based on a 5G communication system.
FIG. 2A is a first flowchart of a method for performing logical channel prioritization (LCP) by a terminal according to an embodiment of the present disclosure.
FIG. 2B is a second flowchart of a method for performing LCP by a terminal according to an embodiment of the present disclosure.
FIG. 2C is a third flowchart of a method for performing LCP by a terminal according to an embodiment of the present disclosure.
FIG. 3A is a fourth flowchart of a method for performing LCP by a terminal according to an embodiment of the present disclosure.
FIG. 3B is a fifth flowchart of a method for performing LCP by a terminal according to an embodiment of the present disclosure.
FIG. 3C is a sixth flowchart of a method for performing LCP by a terminal according to an embodiment of the present disclosure.
FIG. 4A is a seventh flowchart of a method for performing LCP by a terminal according to an embodiment of the present disclosure.
FIG. 4B is an eighth flowchart of a method for performing LCP by a terminal according to an embodiment of the present disclosure.
FIG. 4C is a ninth flowchart of a method for performing LCP by a terminal according to an embodiment of the present disclosure.
FIG. 5 is a flowchart of a method for performing LCP by a network device according to an embodiment of the present disclosure.
FIG. 6 is another flowchart of a method for performing LCP by a network device according to an embodiment of the present disclosure.
FIG. 7 is another flowchart of a method for performing LCP by a network device according to an embodiment of the present disclosure.
FIG. 8 is a block diagram of a communication device according to an embodiment of the present disclosure.
FIG. 9 is a block diagram of a communication device according to an embodiment of the present disclosure.
FIG. 10 is a block diagram of a terminal according to an embodiment of the present disclosure.
FIG. 11 is a block diagram of a network device according to an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of apparatuses and methods consistent with aspects related to the embodiments of the present disclosure as recited in the appended claims.

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. Instead, they are merely examples of apparatuses and methods consistent with aspects related to the embodiments of the present disclosure as recited in the appended claims.

The terms used in embodiments of the present disclosure are solely for the purpose of describing a particular embodiment and are not intended to limit the embodiments of the present disclosure. The terms "a/an" and "the" in a singular form used in embodiments and claims of the present disclosure are also intended to include a plural form, unless the context clearly indicates other meaning. It may also be understood that the term "and/or" as used herein refers to any or all possible combinations of one or more associated listed items.

It may be understood that although the terms first, second, third, etc. may be used to describe various information in the embodiments of the present disclosure, such information should not be limited to these terms. These terms are used only to distinguish information in the same type from one another. For example, without departing from the scope of the embodiments of the present disclosure, the first information may also be referred to as the second information, and similarly, the second information may be referred to as the first information. Depending on the context, words "if" and "in case that" used here may be interpreted as "when", "while", or "in response to determining...".

A technical solution provided by the embodiments of the present disclosure may be applied to wireless communication between communication devices. The wireless communication between the communication devices may include: wireless communication between a network device and a terminal, wireless communication between a network device and a network device, and wireless communication between a terminal and a terminal. In the embodiments of the present disclosure, the term "wireless communication" may also be abbreviated as "communication", and the term "communication" may also be described as "data transmission", "information transmission" or "transmission".

The rapid development of the 5G technology has had a huge impact on people's lives and work. In the 5G technology, an access network device sends an uplink grant (UL grant) to a terminal to allocate an uplink grant resource for the terminal. After receiving the uplink grant from an access network function, the terminal may multiplex data from one or more logical channels to a transmission resource. Therefore, the terminal may perform prioritization processing on logical channels carrying data via a logical channel selection process and a logical channel prioritization process.

The terminal first executes the logical channel selection process to select a logical channel. Specifically, the logical channel selection process includes some conditions, and only a logical channel that meets these conditions may be used for data transmission, i.e., used as a candidate logical channel for the data transmission. These conditions involve following contents (parameters): an allowed subcarrier spacing list (allowedSCS-List), a maximum physical uplink shared channel duration (maxPUSCH-Duration), a configured grant type 1 allowed (configuredGrantType1Allowed), allowed serving cells (allowedServingCells), an allowed configured grant List (allowedCG-List), an allowed physical priority index (allowedPHY-PriorityIndex), and an allowed hybrid automatic repeat request mode (allowedHARQ-mode).

Specifically, above content is elaborated on the background of the 5G communication system:
- allowedSCS-List: allowed subcarrier spacing (SCS) for transmission is set in the allowedSCS-List; and a condition for selecting a corresponding logical channel or a condition that needs to be met is: (if it is configured) an allowed SCS index set in the allowedSCS-List including an SCS index associated with the uplink grant.
- maxPUSCH-Duration: an allowed maximum duration of a physical uplink shared channel (PUSCH) for transmission is set in the maxPUSCH-Duration; and a condition for selecting a corresponding logical channel or a condition that needs to be met is: (if it is configured) the maxPUSCH-Duration being greater than or equal to a PUSCH transmission duration associated with the uplink grant.
- configuredGrantType1Allowed: the ConfiguredGrantType1Allowed configures whether a configured grant type 1 is usable for transmission; and a condition for selecting a corresponding logical channel or a condition that needs to be met is: (if it is configured and true) when an UL is the configured grant type 1.
- allowedServingCells: allowed cells for transmission are set in the allowedServingCells; and a condition for selecting a corresponding logical channel or a condition that needs to be met is: (if it is configured) the allowedServingCells including cell information associated with the uplink grant.
- allowedCG-List: an allowed configured grant (CG) for transmission is set in the allowedCG-List; and a condition for selecting a corresponding logical channel or a condition that needs to be met is: (if it is configured) the allowedCG-List including an CG index associated with the uplink grant.
- allowedPHY-PriorityIndex: an allowed physical layer (PHY) priority index for a dynamic grant is set in the allowedPHY-PriorityIndex; and a condition for selecting a corresponding logical channel or a condition that needs to be met is: (if it is configured) the allowedPHY-PriorityIndex includes a PHY priority index associated with a dynamic uplink grant.
- allowedHARQ-mode: an allowed uplink (UL) HARQ mode of a hybrid automatic repeat reQuest (HARQ) process of a dynamic grant for transmission is set in the allowedHARQ-mode; and a condition for selecting a corresponding logical channel or a condition that needs to be met is: (if it is configured) the allowedHARQ-mode including an HARQ mode associated with a dynamic uplink grant process.

It needs to be noted that these parameters may also exist in a further evolved version of the communication specification, and may have different names, which is not specifically limited in the embodiments of the present disclosure.

After selecting the logical channel, the terminal performs a logical channel prioritization process to allocate a transmission resource for a selected logical channel. For a specific implementation of the logical channel prioritization process and a priority order of the logical channels reference may be made to the description of logical channel prioritization (LCP) in section 5.4.3.1 of the 3GPP specification document TS 36.321.

Extended reality (XR) refers to an environment created using computer technology and wearable devices, which combines a real world and a virtual world and enables human-computer interaction. The XR is a collective term for various technologies such as augmented reality (AR), virtual reality (VR), and mixed reality (MR). Integrating the visual interaction technologies of the AR, VR, and MR provides users with a seamless transition between the virtual world and the real world, creating an "immersive experience". In an XR service, a service flow is usually composed of a plurality of data streams and has a large amount of data.

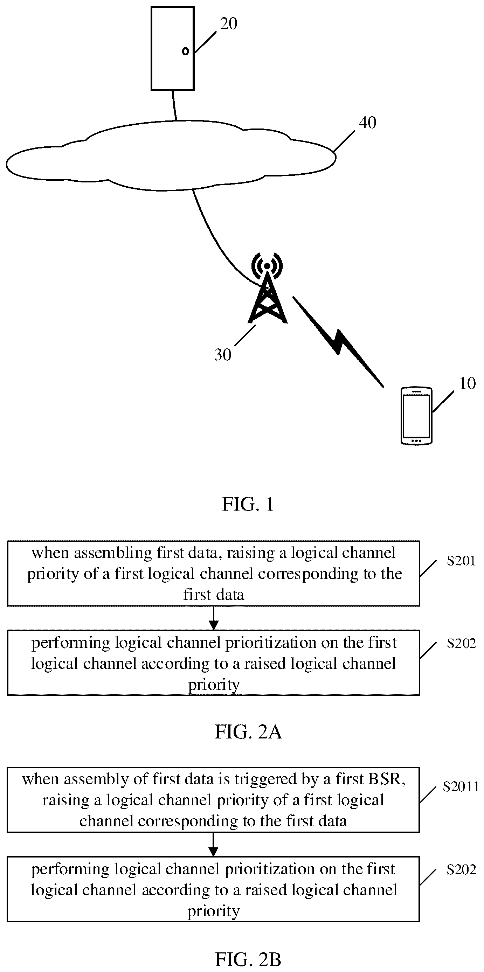

The 5G technology may be used to realize the XR service. FIG. 1 is a schematic diagram of a scenario realizing an eXtended reality (XR) service based on a 5G communication system. In FIG. 1, the 5G communication system may include: a terminal 10, a server 20, and network devices (such as a network device in an access network 30 and a network device in a core network 40). The terminal 10 may be a device configured to realize the XR service. The server 20 may be a server device configured to provide the XR service. The terminal 10 connects to the server 20 via the access network 30 and the core network 40 to achieve data transmission between the terminal 10 and the server 20.

**In** an embodiment, the server 20 is usually provided by an operator or a content provider.

**The** terminal 10 may be a device that provides users with a voice or data connectivity. In some embodiments, the terminal may also be called user equipment (UE), a mobile station, a subscriber unit, a station, or a terminal device, etc. The terminal may be a cellular phone, a personal digital assistant (PDA), a wireless modem, a handheld device, a laptop computer, a cordless phone, a wireless local loop (WLL) station, or a pad, etc. With the development of wireless communication technology, the terminal in the embodiments of the present disclosure may be a device that may access a communication system, communicate with a network side of a communication system, or communicate with other devices via a communication system, such as a wearable device, a projector, a display, a terminal and a car in intelligent transportation, a home appliance in a smart home, a power metering instrument in a smart grid, a voltage monitoring instrument, an environmental monitoring instrument, a video monitoring instrument in a smart fully-integrated network, a cash register, etc. In embodiments of the present disclosure, the terminal may communicate with the network device, and a plurality of terminals may also communicate with each other. The terminal may be static and fixed, or mobile. For example, in the following embodiments, UE is illustrated as an example of the terminal.

For example, for the XR service, the terminal may be a dedicated device for realizing the XR service, such as a pair of XR glasses, an XR helmet, an XR projector, etc.; and the terminal may also be a general device for realizing the XR service, such as a mobile phone, a display, etc. For other services, there are other specific implementations for the terminal, which is not specifically limited in the embodiments of the present disclosure.

The network device may be a device on an access network side that supports the terminal to access to the communication system. The network device 12 may include various forms of macro base stations, micro base stations (also described as small stations), relay stations, access points, etc. In systems using different wireless access technologies, names of the network device 12 may be different, for example, an evolved NodeB (eNB) in a 4G access technology communication system; a next generation NodeB (gNB) a transmission reception point (TRP), a relay node (RN), an access point (AP), etc., in a 5G access technology communication system.

It needs to be noted that in the communication system shown in FIG. 1, functions of each device are only illustrative. When each device is applied to the embodiments of the present disclosure, not all functions are necessarily required. All or part of devices in the core network 4 may be physical entities or virtualized devices, which is not limited herein. The communication system of the present disclosure may also include other devices not shown in FIG. 1, which is not limited herein.

Transmission of a service flow of the XR service needs to meet a certain delay requirement, especially some data streams need to simultaneously reach a network function for synchronous processing (such as joint decoding). Therefore, delay in any data stream may lead to a failure of synchronous processing of a plurality of data streams. Hence, in a process of realizing the XR service using the 5G technology, the network device obtains urgency levels of respective data streams in a scheduling process and configures logical channel priorities. In the 5G technology, an LCP process is used for prioritization processing of a logical channel carrying an XR service data stream.

However, according to a current LCP process, uplink data is assembled strictly according to the logical channel priority. Therefore, when the UE receives the uplink grant, data of a logical channel with a lower priority may not be transmitted in time, which affects data transmission efficiency.

**To** solve the above problem, embodiments of the present disclosure provide a method for performing LCP. The method may be performed by the above terminal, such as UE.

**It** needs to be noted that when the UE implements the method for performing LCP in the embodiments of the present disclosure, the method may actually be executed by a medium access control entity (MAC entity) in the UE. The MAC entity is located at layer 2 (L2), i.e., at an MAC layer. In other cases, the method may also be implemented by other entities in the UE, which is not specifically limited in the embodiments of the present disclosure.

**In** an embodiment, the UE may be configured with one or more logical channels. In an embodiment, if the UE is a dedicated device for realizing a first service (such as the XR service), all of the one or more logical channels of the UE may be used to carry the data of the XR service. In another embodiment, if the UE is a general device for realizing the XR service, at least one of the logical channels of the UE may be used to carry the data of the XR service. It needs to be noted that the first service may also be other services other than the XR service, especially those with a large data volume and a requirement for low latency, which is not specifically limited in the embodiments of the present disclosure.

**In** an embodiment, the first data in the embodiments of the present disclosure may be uplink data of the first service.

**In** an embodiment, the first data in the embodiments of the present disclosure may be uplink data with a scheduling requirement, that is, uplink data that needs to be scheduled as soon as possible. For example, the UE estimates data packets whose remaining packet delay budget (PDB) are almost exhausted but have not been scheduled yet, and need to be scheduled as soon as possible. It needs to be noted that the remaining PDB may be understood as a difference between a delay budget of the data and a duration the data has been waiting, that is, a duration left before exceeding a PDB that is configured for the data.

**In** an embodiment, the first data may be uplink data whose remaining PDB is less than a first threshold. The first threshold may be pre-configured (such as defined by a communication protocol) or configured by the network device for the UE. A configuration granularity of the PDB may be for an individual data packet or for a data packet set. Then, the first data may be the data packet or the data packet set.

**In** an embodiment, in response to the first threshold being configured by the network device, the UE receives configuration information from the network device, in which the configuration information is configured to indicate the first threshold. In an embodiment, a granularity for the network device to configure the first threshold includes but is not limited to: in units of UEs, in units of logical channel groups (LCGs), in units of logical channels (LCs), etc., which is not specifically limited in the embodiments of the present disclosure.

**In** an embodiment, the uplink data with the scheduling requirement may be uplink data with an urgent scheduling requirement.

**In** an embodiment, the uplink data with the urgent scheduling requirement may be uplink data determined by the network device or the UE that needs to be sent in time. For example, the uplink data that needs to be sent in time may include one of: data from a non-access stratum (NAS) and/or an application layer; or data with a PDB less than the first threshold.

**In** another embodiment, the uplink data with the urgent scheduling requirement may be uplink data determined based on service characteristics of specific data. For example, the uplink data with the urgent scheduling requirement may be data with an urgent scheduling requirement determined based on an importance level of the uplink data. For example, when transmitting multimedia stream data, I-frame data is more important than P-frame data. Then, the UE may determine that the I-frame data has an urgent scheduling requirement, that is, the I-frame data is the uplink data with the urgent scheduling requirement. Or, the uplink data with the urgent scheduling requirement may be one of a plurality of data packets that are jointly encoded and decoded. Since the plurality of data packets need to be jointly decoded, one of the data packets does not arrive before a predetermined decoding time point may lead to a failure in decoding. Then, the UE may determine that a data packet that has not been scheduled in the data packets that are jointly encoded and decoded has an urgent scheduling requirement, that is, may determine it as the uplink data with the urgent scheduling requirement.

In an embodiment, the first data is a data packet or a data packet set. Correspondingly, the first data with a high and urgent scheduling requirement may be based on data packet statistics or based on data packet set statistics. For example, the terminal makes statistics on the first data in the first logical channel and determines that the first data has a high and urgent scheduling requirement based on a statistics result.

There may be other situations for the first data, which is not specifically limited in the embodiments of the present disclosure.

In some possible implementations, FIG. 2A is a first flowchart of a method for performing LCP performed by a terminal according to the embodiments of the present disclosure. The method may be performed by a terminal (such as UE). As shown in FIG. 2A, the method may include S201 and S202.

At S201, when the UE assembles first data, a logical channel priority of a first logical channel corresponding to the first data is raised.

In an embodiment, after S201, the UE may further perform S202 to perform the logical channel prioritization processing on the first data.

At S202, the UE performs LCP on the first logical channel according to a raised logical channel priority.

In an embodiment, in S201, assembly of the first data may be triggered by a first BSR, in which the first BSR (i.e., above extended BSR) is associated with delay information of the first data (such as a PDB of the first data), and the first data may be uplink data of a first service. FIG. 2B is a second flowchart of a method for performing LCP performed by a terminal according to an embodiment of the present disclosure, as shown in FIG. 2B, S201 may be S2011, that is, when the assembly of the first data is triggered by the first BSR, the UE raises the logical channel priority of the first logical channel corresponding to the first data. Then, the method may include S2011 and S202.

In an embodiment, when the UE performs data transmission, some data streams belong to a logical channel with a low priority. If the data have not been scheduled for a long time, the UE needs to send the BSR to the network device to inform a network as soon as possible that the data has a scheduling requirement and to request the network to schedule the data as soon as possible. However, since the UE may send the BSR only when data of a logical channel with a high priority arrives, data of a logical channel with the low priority may still not be transmitted in time. Therefore, an extended BSR is introduced. The extended BSR is associated with delay information of data with a scheduling requirement. When the UE determines that the first data has a scheduling requirement, the UE sends the extended BSR associated with the delay information of the first data to the network device to inform the network that the first data needs to be scheduled. It needs to be noted that the extended BSR described above may also be referred to as an extended BSR, a new BSR, a second type of BSR, etc. A specific name and/or description of the extended BSR is not limited in the embodiments of the present disclosure.

Then, before S2011, the UE may also send the extended BSR to the network device. After receiving the extended BSR, the network device may allocate an uplink grant to the UE based on a data volume carried by the extended BSR. Next, when the first data arrives, the UE assembles the first data and maps it to the uplink grant. Here, the assembly of the first data by the UE may be considered as triggered by the extended BSR. In a process of assembling the first data, the UE may first determine the first logical channel corresponding to the first data.

In another embodiment, the network device may have already allocated the uplink grant to the UE before receiving the extended BSR. That is, the uplink grant obtained by the UE is not necessarily triggered by the extended BSR. Therefore, the assembly of the first data may not necessarily be triggered by the extended BSR. When the first data arrives, the UE assembles the first data and maps it to a previously allocated uplink grant. Here, the assembly of the first data by the UE may not necessarily be triggered by the extended BSR. In a process of the UE assembling the first data, the UE may first determine the first logical channel corresponding to the first data.

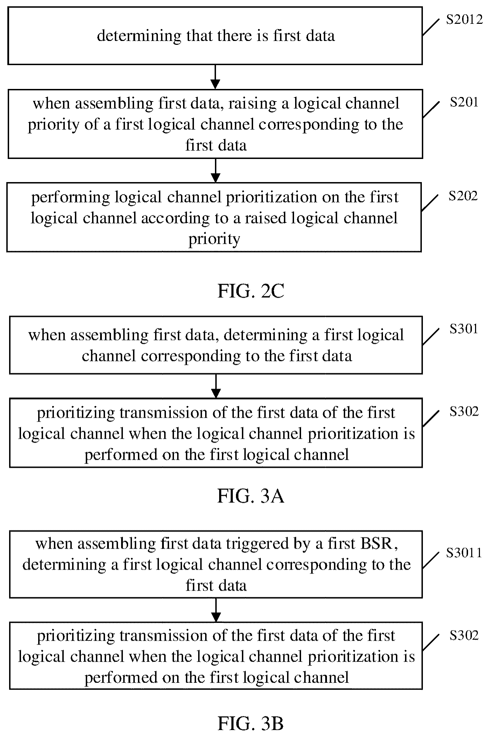

In an embodiment, the assembly of the first data may also be triggered by a specific type of data, that is, the UE determines that the first data is a specific type of data, such as data with a scheduling requirement. Then, FIG. 2C is a third flowchart of a method for performing LCP performed a terminal according to the embodiments of the present disclosure. As shown in FIG. 2C, before S201, the UE may also perform S2012, that is, the UE determines that there is first data. The above method may include S2012, S201 and S202. It may be understood that when the UE detects existence of UL data with a scheduling requirement, i.e., the first data, and when assembling the first data, the logical channel priority of the first logical channel corresponding to the first data is raised. In an embodiment, the first data may also be extended to other specific types of data. When the UE detects existence of a specific type of UL data (that is, the first data), the logical channel priority of the first logical channel corresponding to the first data is raised.

In an embodiment, the UE may perform S201 based on a pre-configuration or a configuration of the network device when assembling the first data. For example, after the UE reports the extended BSR to the network device, when executing the assembly of the first data triggered by the extended BSR, the UE may perform S201 according to a default setting, or the UE may select to perform S201 based on an indication of the network device when executing the assembly of the first data triggered by the extended BSR.

In an embodiment, before S201, the UE may also receive a first instruction sent by a network device, in which the first instruction is configured to instruct the terminal to raise the logical channel priority of the first logical channel when transmitting the first data. Then, in response to the first instruction, the UE raises the logical channel priority of the first logical channel corresponding to the first data.

In an embodiment, the first instruction is configured to schedule an uplink grant. For example, the first instruction may be downlink control information (DCI).

It needs to be noted that the first indication information may be carried in the first instruction. At this time, the first indication information is configured to instruct the UE to raise the logical channel priority of the first logical channel when transmitting the first data and indicate the preset priority level. The first indication information and the first instruction may also be sent separately.

In an embodiment, in S201, the UE may change a transmission order of the first data by raising the logical channel priority of the first logical channel corresponding to the first data, so that the first data may be transmitted preferentially. For example, the UE may raise the logical channel priority of the first logical channel to a maximum priority level or a preset priority level.

In an embodiment, the UE may only raise the logical channel priority of the first logical channel, or raise a logical channel priority of a logical channel group where the first logical channel is located.

In an embodiment, the preset priority level may be pre-configured or configured by the network device to the UE.

In an embodiment, in response to the preset priority level being configured by the network device, before S201, the above method may further include the following step. The UE receives the first indication information sent by the network device, in which the first indication information is configured to indicate the preset priority level.

In an embodiment, the UE may also determine whether to raise the logical channel priority of the first logical channel to the maximum priority level or the preset priority level based on a pre-configuration or a configuration of the network device. Thus, the UE may adopt different adjustment strategies of the logical channel priority according to different scheduling requirements of the data, so that data with different scheduling requirements may be transmitted in time, which further improves data transmission efficiency.

In an embodiment, by executing S201, the logical channel priority of the first logical channel is raised. Then, in order to further prioritize the transmission of the first data, in a process of performing the LCP on the first logical channel, the UE may not restrict transmission of the first data of the first logical channel using a token bucket. That is, for the raised logical channel priority, there may be a plurality of logical channels including the first logical channel. When transmitting the plurality of logical channels, the UE may use a transmission resource as much as possible for the transmission of the first data. For example, the UE may use all remaining uplink grants to map the first data. After the transmission of the first data is completed, if there are still remaining uplink grants, the remaining uplink grants may be used to transmit data of other logical channels with the logical channel priority. Or, the UE may update a value of prioritized bit rate (PBR) of the first logical channel to infinity. Or, the UE may transmit the first data until the uplink grant is exhausted. The UE may also adopt other methods to use the transmission resource as much as possible for the transmission of the first data of the first logical channel, which is not specifically limited in the embodiments of the present disclosure.

In an embodiment, the logical channel priority of the first logical channel maintains at a raised logical channel priority before transmission of the first data is completed, so that the transmission of the first data may be prioritized, which avoids a packet loss and improves data transmission efficiency and reliability.

In embodiments of the present disclosure, when assembly of the first data is triggered by the first BSR associated with the delay information of the first data having the scheduling requirement, by raising the logical channel priority of the first logical channel corresponding to the first data, the transmission of the first data may be prioritized, thereby the first data can be transmitted in time and data transmission efficiency is improved.

In some possible implementations, FIG. 3A is a fourth flowchart of a method for performing LCP performed by a terminal according to an embodiment of the present disclosure. The method may be performed by a terminal (such as UE). As shown in FIG. 3A, the above method may include S301 and S302.

At S301, when the UE assembles first data, a first logical channel corresponding to the first data is determined.

At S302, the UE prioritizes transmission of the first data of the first logical channel when the LCP is performed on the first logical channel.

In an embodiment, in S301, the assembly of the first data may be triggered by a first BSR. The first BSR (i.e., the extended BSR) is associated with delay information of the first data (such as PDB of the first data), and the first data may be uplink data of the first service. At this time, FIG. 3B is a fifth flowchart of a method for performing LCP performed by a terminal according to the embodiments of the present disclosure. As shown in FIG. 3B, S301 may be S3011, that is, when the UE assembles the first data triggered by the first BSR, the first logical channel corresponding to the first data is determined. Then, the above method may include S3011 and S302.

In an embodiment, before S3011, the UE may send the extended BSR to the network device. After receiving the extended BSR, the network device may allocate an uplink grant to the UE based on a data volume carried by the extended BSR. Next, when the first data arrives, the UE assembles the first data and maps it to the uplink grant. Here, the assembly of the first data performed by the UE may be considered as triggered by the extended BSR. In a process of assembling the first data, the UE first performs S3011 to determine the first logical channel corresponding to the first data.

In another embodiment, the network device may have already allocated the uplink grant to the UE before receiving the extended BSR. That is, the uplink grant obtained by the UE is not necessarily triggered by the extended BSR. Therefore, the assembly of the first data may not necessarily be triggered by the extended BSR. When the first data arrives, the UE assembles the first data and maps it to a previously allocated uplink grant. Here, the assembly of the first data by the UE may not necessarily be triggered by the extended BSR. In a process of the UE assembling the first data, the UE first performs S3011 to determine the first logical channel corresponding to the first data.

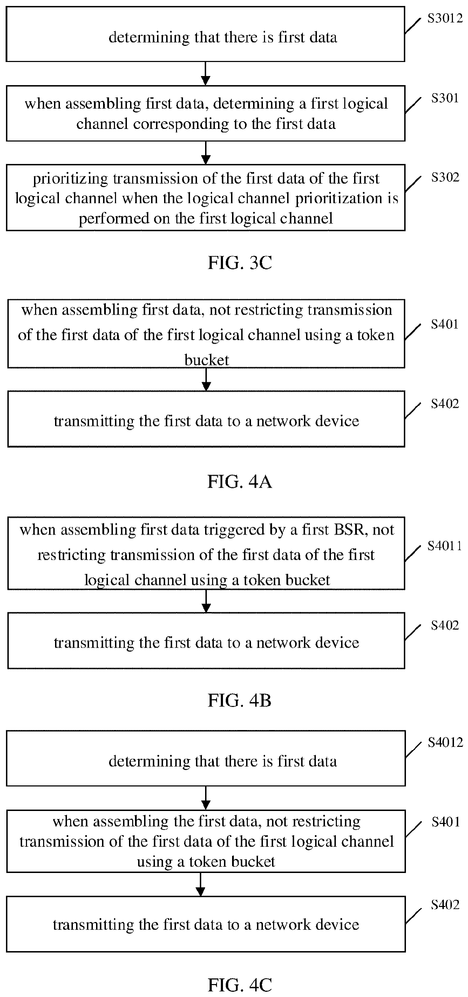

In an embodiment, the assembly of the first data may also be triggered by a specific type of data, that is, the UE determines that the first data is a specific type of data, such as data with a scheduling requirement. Then, FIG. 3C is a sixth flowchart of a method for performing LCP by a terminal according to the embodiments of the present disclosure. As shown in FIG. 3C, before S301, the UE may also perform S3012, that is, the UE determines that there is first data. The above method may include S3012, S301 and S302.

It may be understood that when the UE detects existence of the uplink data with the scheduling requirement, i.e., the first data, and when the UE assembles the first data, the UE determines the first logical channel corresponding to the first data, and then prioritizes transmission of the first data of the first logical channel when the LCP is performed on the first logical channel. In an embodiment, the first data may also be extended to other specific types of data. Then, when the UE detects existence of a specific type of UL data (that is, first data), and when the UE assembles the first data, the first logical channel corresponding to the first data is determined, and then the transmission of the first data of the first logical channel is prioritized when the LCP is performed on the first logical channel.

In an embodiment, the UE may perform S301 based on a pre-configuration or a configuration of the network device when assembling the first data. For example, after the UE reports the extended BSR to the network device, when performing the assembly of the first data triggered by the extended BSR, the UE may perform S301 according to a default setting, or the UE may select to perform S301 based on an indication of the network device when performing the assembly of the first data triggered by the extended BSR.

In an embodiment, before S301, the UE may also receive a second instruction sent by the network device, in which the second instruction is configured to instruct the terminal to prioritize the transmission of the first data of the first logical channel. Next, in response to the second instruction, the UE prioritizes the transmission of the first data of the first logical channel when the LCP is performed on the first logical channel.

In an embodiment, the second instruction is configured to schedule an uplink grant. For example, the second instruction may be DCI.

In an embodiment, in order to transmit the first data in time, the UE may not necessarily process the first data according to the logical channel priority when performing the LCP. Then, in S302, the UE may prioritize the transmission of the first data of the first logical channel when performing the LCP on the first logical channel. For example, the UE may prioritize the transmission of the first data of the first logical channel among a plurality of logical channels with the same logical channel priority. Thus, under the same logical channel priority, the first data is transmitted before data of other logical channels. Or, the UE may prioritize the transmission of the first data of the first logical channel among a plurality of logical channels with different logical channel priorities. Thus, the first logical channel is adjusted to be transmitted before a logical channel with a maximum priority level, and the first data is transmitted before the data of other logical channels. The UE may also use other methods to prioritize the transmission of the first data, which is not specifically limited in the embodiments of the present disclosure.

In an embodiment, in order to further prioritize transmission of the first data, in a process of performing the LCP on the first logical channel, the UE may not restrict transmission of the first data of the first logical channel using a token bucket. That is, when transmitting the logical channel, the UE may use a transmission resource as much as possible for the transmission of the first data. For example, the UE may use all remaining uplink grants to map the first data. After the transmission of the first data is completed, if there are still remaining uplink grants, the remaining uplink grants may be used to transmit data of other logical channels. Or, the UE may update a value of PBR of the first logical channel to infinity. Or, the UE may transmit the first data until the uplink grant is exhausted. The UE may also adopt other methods to use the transmission resource as much as possible for the transmission of the first data of the first logical channel, which is not specifically limited in the embodiments of the present disclosure.

In an embodiment, the UE prioritizes the transmission of the first data of the first logical channel before the transmission of the first data is completed, so that the transmission of the first data may be overall prioritized, thereby achieving the transmission of the first data in time and improving data transmission efficiency.

In embodiments of the present disclosure, when assembly of the first data is triggered by the first BSR associated with the delay information of the first data having the scheduling requirement, by prioritizing the first data of the first logical channel, the transmission of the first data may be prioritized, thereby achieving the transmission of the first data in time and improving data transmission efficiency.

In some possible implementations, FIG. 4A is a seventh flowchart of a method for performing LCP by a terminal according to the embodiments of the present disclosure. The method may be performed by a terminal (such as UE). As shown in FIG. 4A, the above method may include S401.

At S401, when assembling first data, the UE does not restrict transmission of the first data of the first logical channel using a token bucket.

In an embodiment, as shown in FIG. 4A, after S401, S402 may also be included.

At S402, the UE transmits the first data to a network device.

In an embodiment, in S402, the UE maps the first data of the first logical channel to an uplink grant and transmits it to the network device.

In an embodiment, in S401, the assembly of the first data may be triggered by a first BSR. The first BSR (i.e., the extended BSR) is associated with delay information of the first data (such as a PDB of the first data), and the first data may be uplink data of the first service. At this time, FIG. 4B is an eighth flowchart of a method for performing LCP by a terminal according to the embodiments of the present disclosure. As shown in FIG. 4B, S401 may be S4011, that is, when the UE assembles the first data triggered by the first BSR, the transmission of the first data of the first logical channel is not restricted using the token bucket. Then, the above method may include S4011 and S402.

In an embodiment, before S4011, the UE may send the extended BSR to the network device. After receiving the extended BSR, the network device may allocate an uplink grant to the UE based on a data volume carried by the extended BSR. Next, when the first data arrives, the UE assembles the first data and maps it to the uplink grant. Here, the assembly of the first data performed by the UE may be considered as triggered by the extended BSR. In a process of assembling the first data by the UE, the UE performs S4011.

In another embodiment, the network device may have already allocated the uplink grant to the UE before receiving the extended BSR. That is, the uplink grant obtained by the UE is not necessarily triggered by the extended BSR. Therefore, the assembly of the first data may not necessarily be triggered by the extended BSR. When the first data arrives, the UE assembles the first data and maps it to a previously allocated uplink grant. Here, the assembly of the first data by the UE may not necessarily be triggered by the extended BSR. In a process of the UE assembling the first data, the UE first performs S4011.

In an embodiment, the assembly of the first data may also be triggered by a specific type of data, that is, the UE determines that the first data is a specific type of data, such as data having a scheduling requirement. Then, FIG. 4C is a ninth flowchart of a method for performing LCP by a terminal according to the embodiments of the present disclosure. As shown in FIG. 4C, before S401, the UE may also perform S4012, that is, the UE determines that there is first data. The above method may include S4012, S401 and S402.

It may be understood that when the UE detects existence of the uplink data having the scheduling requirement, i.e., the first data, and when the UE assembles the first data, the UE does not restrict transmission of the first data of the first logical channel using the token bucket. Then, the UE maps the first data of the first logical channel to the uplink grant and transmit it to the network device. In an embodiment, the first data may also be extended to other specific types of data. Then, when the UE detects existence of a specific type of UL data (that is, first data) and assembles the first data, the UE does not restrict the transmission of the first data of the first logical channel using the token bucket. Then, the UE maps the first data of the first logical channel to the uplink grant and transmit it to the network device.

In an embodiment, the UE may perform S401 when assembling the first data based on a pre-configuration or a configuration of the network device. For example, after the UE reports the extended BSR to the network device, when executing the assembly of the first data triggered by the extended BSR, the UE may perform S401 according to a default setting, or the UE may select to perform S301 based on an indication of the network device when executing the assembly of the first data triggered by the extended BSR.

In an embodiment, before S401, the UE may also receive a third instruction sent by the network device. The third instruction is configured to instruct the UE to not restrict the transmission of the first data of the first logical channel using the token bucket. Then, in response to the third instruction, the UE does not restrict the transmission of the first data of the first logical channel using the token bucket when performing the LCP on the first logical channel.

In an embodiment, the third instruction is configured to schedule an uplink grant. For example, the third instruction may be DCI.

In an embodiment, in order to further prioritize transmission of the first data, in a process of performing the LCP on the first logical channel, the UE may not restrict transmission of the first data of the first logical channel using a token bucket. That is, when transmitting the logical channel, the UE may use a transmission resource as much as possible for the transmission of the first data. For example, the UE may use all remaining uplink grants to map the first data. After the transmission of the first data is completed, if there are still remaining uplink grants, the remaining uplink grants may be used to transmit data of other logical channels. Or, the UE may update a value of PBR of the first logical channel to infinity. Or, the UE may transmit the first data until the uplink grant is exhausted. The UE may also adopt other methods to use the transmission resource as much as possible for the transmission of the first data of the first logical channel, which is not specifically limited in the embodiments of the present disclosure.

In the embodiments of the present disclosure, when assembly of the first data is triggered by the first BSR associated with the delay information of the first data with the scheduling requirement, by using the uplink grant as much as possible for the transmission of the first data, the transmission of the first data may be prioritized, thereby achieving the transmission of the first data in time and improving data transmission efficiency.

In some possible implementations, in the embodiments of FIGs. 2A to 4C mentioned above, the UE may determine a packet assembly strategy when the assembly of the first data is triggered by the extended BSR according to a pre-configuration or a configuration of the network device. For example, a first packet assembly strategy may be raising the logical channel priority of the first logical channel corresponding to the first data; a second packet assembly strategy may be prioritizing the transmission of the first data of the first logical channel when the LCP is performed on the first logical channel; and a third packet assembly strategy may be not restricting the transmission of the first data of the first logical channel using the token bucket.

In another embodiment, the network device may have already allocated the uplink grant to the UE before receiving the extended BSR. That is, the uplink grant obtained by the UE is not necessarily triggered by the extended BSR. Therefore, the assembly of the first data may not be triggered by the extended BSR. When the first data arrives, the UE may determine an assembly strategy when assembling the first data based on a pre-configuration or a configuration of the network device.

In an embodiment, the assembly of the first data may also be triggered by a specific type of data, that is, the UE determines that the first data is a specific type of data, such as data with a scheduling requirement. Then, when the UE detects presence of a specific type of uplink data and determines an assembly strategy when assembling the first data based on the pre-configuration or the configuration of the network device.

In an embodiment, the UE determines a packet assembly strategy based on the configuration of the network device. Then, before executing the assembly of the first data triggered by the extended BSR, the UE may receive an instruction (such as the first instruction, the second instruction, or the third instruction) sent by the network device, in which the instruction is configured to indicate a packet assembly strategy corresponding to the first data. Then, in response to the instruction, the UE selects to perform S201 to S202, S301 to S302, or S401.

In an embodiment, the third instruction is configured to schedule an uplink grant. For example, the third instruction may be DCI.

It needs to be noted that for the above assembly strategy reference may be made to the description of S201 to S202, S301 to S302, or S401 in FIGs. 2 to 4. To keep the description concise, no further explanation will be provided here.

It needs to be noted that the steps in the above embodiments may be executed independently or in combination. In a case that there is no conflict, an execution order of each step may be exchanged arbitrarily.

Based on the same inventive concept, the embodiments of the present disclosure also provide a method for performing LCP. The method may be performed by a network device. The network device is an opposite device of the UE in the above embodiments.

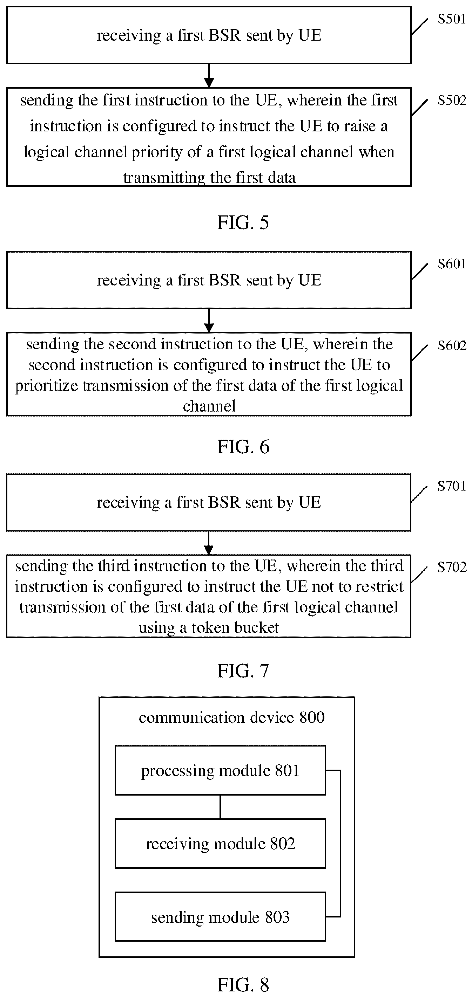

FIG. 5 is a flowchart of a method for performing LCP by a network device according to the embodiments of the present disclosure. As shown in FIG. 5, the above method may include S501 and S502.

At S501, the network device receives a first buffer status report (BSR) sent by a terminal (such as UE).

At S502, the network device sends a first instruction to the UE, in which the first instruction is configured to instruct the UE to raise a logical channel priority of a first logical channel when transmitting the first data.

The first BSR is associated with delay information of the first data, and the first logical channel is a logical channel corresponding to the first data. The first data may be uplink data of a first service.

In an embodiment, the first instruction is configured to schedule an uplink grant. For example, the first instruction may be DCI.

In an embodiment, the first instruction is used to instruct the UE to raise the logical channel priority of the first logical channel to a maximum priority level or a preset priority level when transmitting the first data.

In an embodiment, in response to the first instruction being configured to instruct the UE to raise the logical channel priority of the first logical channel to the preset priority level when transmitting the first data, the network device may also send first indication information to the UE, in which the first indication information is configured to indicate the preset priority level.

It needs to be noted that the first indication information may be carried in the first instruction. In this case, the first indication information is configured to instruct the UE to raise the logical channel priority of the first logical channel when transmitting the first data, and indicate the preset priority level. The first indication information and the first instruction may also be sent separately.

In the embodiments of the present disclosure, for specific descriptions of S501 to S502 reference may be made to the description of a network device side in the implementations of FIGS. 2A - 2C. To keep the description concise, no further explanation will be provided here.

In some possible implementations, FIG. 6 is another flowchart of a method for performing LCP by a network device according to the embodiments of the present disclosure. As shown in FIG. 6, the above method may include S601 and S602.

At S601, the network device receives a BSR sent by UE.

At S602, the network device sends a second instruction to the UE, in which the second instruction is configured to instruct the UE to prioritize transmission of the first data of a first logical channel.

The first BSR is associated with delay information of the first data.

In some possible implementations, the second instruction is configured to instruct the terminal to prioritize the transmission of the first data of the first logical channel among a plurality of logical channels with the same logical channel priority; or the second instruction is configured to instruct the terminal to prioritize the transmission of the first data of the first logical channel among a plurality of logical channels with different logical channel priorities.

In the embodiments of the present disclosure, for specific descriptions of S601 to S602 reference may be made to the description of a network device side in implementations of FIGS. 3A - 3C. To keep the description concise, no further explanation will be provided here.

In some possible implementation methods, FIG. 7 is another flowchart of a method for performing LCP by a network device according to the embodiments of the present disclosure. As shown in FIG. 7, the above method may include S701 and S702.

At S701, the network device receives a first BSR sent by UE.

At S702, the network device sends a third instruction to the UE, in which the third instruction is configured to instruct the UE not to restrict transmission of the first data of the first logical channel using a token bucket.

The first BSR is associated with delay information of the first data, and the first logical channel is a logical channel corresponding to the first data. The first data may be uplink data of a first service.

In an embodiment, the third instruction is configured to schedule an uplink grant. For example, the third instruction may be DCI.

In the embodiments of the present disclosure, for specific descriptions of S701 to S702 reference may be made to the description of a network device side in implementations of FIGS. 4A - 4C. To keep the description concise, no further explanation will be provided here.

In some possible implementations, in the embodiments of FIGs. 2 to 4 mentioned above, the network device may determine a packet assembly strategy for the UE when the assembly of the first data is triggered by the first BSR. For example, a first packet assembly strategy may be raising the logical channel priority of the first logical channel corresponding to the first data; a second packet assembly strategy may be prioritizing the transmission of the first data of the first logical channel when the LCP is performed on the first logical channel; and a third packet assembly strategy may be not restricting the transmission of the first data of the first logical channel using the token bucket.

In an embodiment, after the network device receives the extended BSR, it may send an instruction (such as the first instruction, the second instruction or the third instruction) to the UE, in which the instruction is configured to instruct an assembly strategy corresponding to the first data. Then, in response to the instruction, the UE selects to perform S201 to S202, S301 to S302 or S401.

In an embodiment, the above instruction is configured to schedule an uplink grant. For example, the above instruction may be DCI.

It needs to be noted that for the above assembly strategies reference may be made to the specific descriptions of S201 to S202, S301 to S302 and S401 in the embodiments of FIGs. 2 to 4. To keep the description concise, no further explanation will be provided here.

It needs to be noted that the steps in the above embodiments may be executed independently or in combination. In a case that there is no conflict, an execution order of each step may be exchanged arbitrarily.

Based on the same inventive concept, the embodiments of the present disclosure also provide a communication device. FIG. 8 is a block diagram of a communication device according to the embodiments of the present disclosure. As shown in FIG. 8, the communication device 800 includes: a processing module 801.

In some possible implementations, the communication device 800 may be a terminal in a communication system, or a chip or system on chip in a terminal, or it may be a functional module in a terminal for realizing methods of each of the above embodiments. The communication device may realize functions executed by the terminal in the above embodiments. The functions may be implemented by software which is executed by hardware. The hardware or software include one or more modules corresponding to above functions.

In some possible implementations, the processing module 801 is configured to: when assembly of first data is triggered by a first BSR, raise a logical channel priority of a first logical channel corresponding to the first data, in which the first BSR is associated with delay information of the first data; and perform LCP on the first logical channel according to a raised logical channel priority.

In some possible implementations, the first data is uplink data with an urgent scheduling requirement.

In some possible implementations, the first data is uplink data whose remaining PDB is less than a first threshold.

In some possible implementations, the first data is a data packet or a data packet set.

In some possible implementations, the processing module 801 is configured to: raise the logical channel priority of the first logical channel to a maximum priority level; or raise the logical channel priority of the first logical channel to a preset priority level.

In some possible implementations, in response to raising the logical channel priority of the first logical channel to the preset priority level, the device 800 further includes: a receiving module 802, configured to receive first indication information sent by a network device, in which the first indication information is configured to indicate the preset priority level.

In some possible implementations, the device 800 further includes: a receiving module 802, configured to receive a first instruction sent by a network device, in which the first instruction is configured to instruct the terminal to raise the logical channel priority of the first logical channel when transmitting the first data; correspondingly, the processing module 801 is configured to: in response to the first instruction, raise the logical channel priority of the first logical channel corresponding to the first data.

In some possible implementations, the first instruction is configured to schedule an uplink grant.

In some possible implementations, the processing module 801 is configured to: in a process of performing the LCP on the first logical channel, not restrict transmission of the first data using a token bucket.

In some possible implementations, the processing module 801 is configured to: maintain the logical channel priority of the first logical channel at a raised logical channel priority before transmission of the first data is completed.

In some possible implementations, the processing module 801 is configured to: when assembly of first data is triggered by a first BSR, determine a first logical channel corresponding to the first data, in which the first BSR is associated with delay information of the first data; and prioritize transmission of the first data of the first logical channel when the LCP is performed on the first logical channel.

In some possible implementations, the first data is uplink data with an urgent scheduling requirement.

In some possible implementations, the first data is uplink data whose remaining PDB is less than a first threshold.

In some possible implementations, the first data is a data packet or a data packet set.

In some possible implementations, the processing module 801 is configured to: prioritize the transmission of the first data of the first logical channel among a plurality of logical channels with the same logical channel priority; or prioritize the transmission of the first data of the first logical channel among a plurality of logical channels with different logical channel priorities.

In some possible implementations, the device 800 800 further includes: a receiving module 802, configured to receive a second instruction sent by a network device, in which the second instruction is configured to instruct the terminal to prioritize the transmission of the first data of the first logical channel; correspondingly, a processing module 801, configured to, in response to the second instruction, prioritize the transmission of the first data of the first logical channel when the LCP is performed on the first logical channel.

In some possible implementations, the processing module 801 is configured to: in a process of performing the LCP on the first logical channel, not restrict the transmission of the first data using a token bucket.

In some possible implementations, the processing module 801 is configured to: prioritize the transmission of the first data of the first logical channel before the transmission of the first data is completed.

In some possible implementations, the processing module 801 is configured to: when assembly of a first data assembly packet is triggered by a first BSR, not restrict transmission of the first data of a first logical channel using a token bucket.

In some possible implementations, the processing module 801 is configured to: prioritize mapping of the first data of the first logical channel to an uplink grant; or update a value of a PBR of the first logical channel to infinity; or transmit the first data until the uplink grant is exhausted.

In some possible implementations, the communication device 800 may be a network device in a communication system, or a chip or a system on chip in a network device, or a functional module configured to implement methods of various embodiments in a network device. The communication device 800 may realize functions executed by the network device in the above embodiments. The functions may be realized by executing corresponding software by hardware. The hardware or software includes one or more modules corresponding to the above functions.

In some possible implementations, the device 800 further includes: a receiving module 802, configured to receive a first BSR sent by a terminal, in which the first BSR is associated with delay information of first data; and a sending module 803, configured to send a first instruction to the terminal, in which the first instruction is configured to instruct the terminal to raise a logical channel priority of a first logical channel when transmitting the first data.

In some possible implementations, the first data is uplink data with an urgent scheduling requirement.

In some possible implementations, the first data is uplink data whose remaining PDB is less than a first threshold.

In some possible implementations, the first data is a data packet or a data packet set.

In some possible implementations, the first instruction is configured to schedule an uplink grant.

In some possible implementations, the first instruction is configured to instruct the terminal to raise the logical channel priority of the first logical channel to a maximum priority level or a preset priority level when transmitting the first data.

In some possible implementations, in response to the first instruction being configured to instruct the terminal to raise the logical channel priority of the first logical channel to the preset priority level when transmitting the first data, the sending module 803 is further configured to: send first indication information to the terminal, in which the first indication information is configured to indicate the preset priority level.

In some possible implementations, the receiving module 802 is configured to receive a first BSR sent by a terminal, in which the first BSR is associated with delay information of first data; and send a second instruction to the terminal, in which the second instruction is configured to instruct the terminal to prioritize transmission of the first data of a first logical channel.

In some possible implementations, the first data is uplink data with an urgent scheduling requirement.

In some possible implementations, the first data is uplink data whose remaining PDB is less than a first threshold.

In some possible implementations, the first data is a data packet or a data packet set.

In some possible implementations, the second instruction is configured to instruct the terminal to prioritize the transmission of the first data of the first logical channel among a plurality of logical channels with the same logical channel priority; or the second instruction is configured to instruct the terminal to prioritize the transmission of the first data of the first logical channel among a plurality of logical channels with different logical channel priorities.

It needs to be noted that for specific implementations of the processing module 801, the receiving module 802, and the sending module 803 reference may be made to the detailed descriptions of the UE and the network device in FIGs. 2 to 7. To keep the description concise, no further explanation will be provided here.

In the embodiments of the present disclosure, the receiving module 802 may be a receiving interface, a receiving circuit, or a receiver, etc.; the sending module 803 may be a sending interface, a sending circuit, or a transmitter, etc.; and the processing module 803 may be one or more processors.

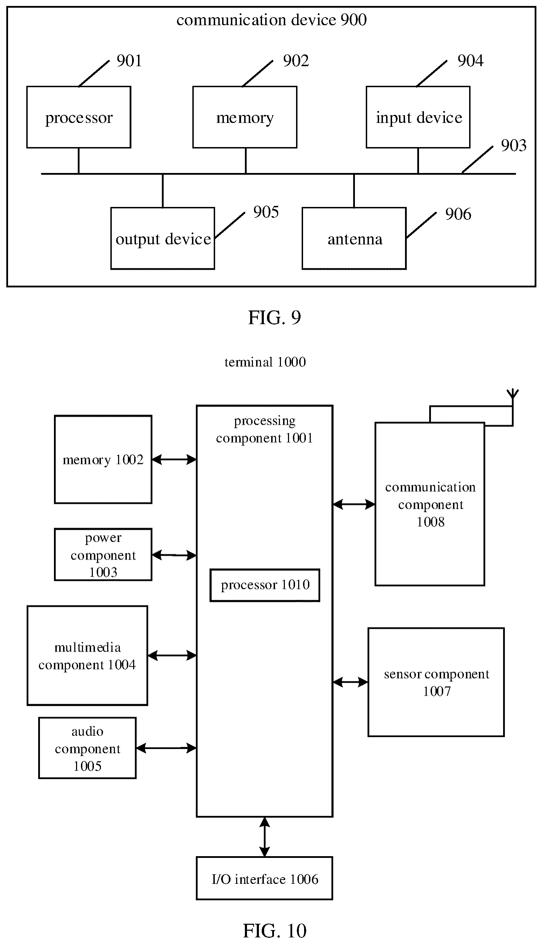

Based on the same inventive concept, the embodiments of the present disclosure also provide a communication device. The communication device may be the terminal or the network device in any one or more of the above embodiments. FIG. 9 is a block diagram of a communication device according to the embodiments of the present disclosure. As shown in FIG. 9, a communication device 900 adopts general computer hardware, including a processor 901, a memory 902, a bus 903, an input device 904 and an output device 905.

In some possible implementations, the memory 902 may include a computer storage medium in a form of volatile and/or non-volatile storage, such as a read-only memory and/or a random access memory. The memory 902 may store an operating system, an application, other program modules, an executable code, program data, user data, etc.

The input device 904 is configured to input a command and information to the communication device. The input device 904 may be a keyboard or a pointing device, such as a mouse, a trackball, a touchpad, a microphone, a joystick, a game pad, a satellite TV antenna, a scanner or a similar device. These input devices may be connected to the processor 901 via the bus 903.

The output device 905 is configured to output information from the communication device. In addition to a monitor, the output device 905 may also be other peripheral output devices, such as a speaker and/or a printing device. These output devices may also be connected to the processor 901 via the bus 903.

The communication device may be connected to a network via an antenna 906, for example, a local area network (LAN). In a networked environment, computer-executable instructions stored in a control unit may be stored in a remote storage device, which is not limited to be stored locally.

When the processor 901 in the communication device executes an executable code or an application stored in the memory 902, the communication device executes the method for performing LCP on a terminal or a network device side in the above embodiments. For a specific execution process reference may be made to the above embodiments, which will not be repeated here.

Based on the same inventive concept, the embodiments of the present disclosure also provide a terminal, which is consistent with the terminal of one or more of the above embodiments. In an embodiment, the terminal may be a mobile phone, a computer, a digital broadcast terminal, a messaging device, a game console, a tablet device, a medical device, an exercise device, a personal digital assistant, and so on.

FIG. 10 is a block diagram of a terminal according to the embodiments of the present disclosure. As shown in FIG. 10, the terminal 1000 may include one or more of: a processing component 1001, a memory 1002, a power component 1003, a multimedia component 1004, an audio component 1005, an input/output (I/O) interface 1006, a sensor component 1007, and a communication component 1008.

The processing component 1001 normally controls the overall operation of the terminal 1000, such as operations associated with displaying, telephone calls, data communications, camera operations and recording operations. The processing component 1001 may include one or a plurality of processors 1010 to execute instructions so as to perform all or part of the steps of the above methods. In addition, the processing component 1001 may include one or a plurality of modules to facilitate interactions between the processing component 1001 and other components. For example, the processing component 1001 may include a multimedia module to facilitate interactions between the multimedia component 1004 and the processing component 1001.

The memory 1002 is configured to store various types of data to support operations at the terminal 1000. Examples of such data include instructions for any application or method operated on the terminal 1000, contact data, phone book data, messages, images, videos and so on. The memory 1002 may be realized by any type of volatile or non-volatile storage devices, or a combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a disk or an optical disk.

The power component 1003 provides power to various components of the terminal 1000. The power component 1003 may include a power management system, one or more power sources and other components associated with power generation, management, and distribution of the terminal 1000.

The multimedia component 1004 includes a screen that provides an output interface between the terminal 1000 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may sense not only the boundary of the touches or sliding actions, but also the duration and pressure related to the touches or sliding operations. In some embodiments, the multimedia component 1004 includes a front camera and/or a rear camera. When the terminal 1000 is in an operation mode such as a shooting mode or a video mode, the front camera and/or the rear camera may receive external multimedia data. Each front camera and rear camera may be a fixed optical lens system or have a focal length and an optical zoom capability.

The audio component 1005 is configured to output and/or input an audio signal. For example, the audio component 1005 includes a microphone (MIC) that is configured to receive an external audio signal when the terminal 1000 is in an operation mode such as a call mode, a recording mode, and a voice recognition mode. The received audio signal may be further stored in the memory 1002 or transmitted via the communication component 1008. In some embodiments, the audio component 1005 also includes a speaker for outputting audio signals.

The I/O interface 1006 provides an interface between the processing component 1001 and a peripheral interface unit. The peripheral interface unit may be a keyboard, a click wheel, a button and so on. These buttons may include, but are not limited to, a home button, a volume button, a start button, and a locking button.

The sensor component 1007 includes one or more sensors for providing the terminal 1000 with various aspects of status assessments. For example, the sensor component 1007 may detect an ON/OFF state of the terminal 1000 and a relative positioning of the components. For example, the components may be a display and a keypad of the terminal 1000. The sensor component 1007 may also detect a change in position of the terminal 1000 or a component of the terminal 1000, a presence or absence of contact of the user with the terminal 1000, orientation or acceleration/deceleration of the terminal 1000 and a temperature change of the terminal 1000. The sensor component 1007 may include a proximity sensor configured to detect the presence of nearby objects without any physical contact. The sensor component 1007 may also include a light sensor (such as a CMOS or a CCD image sensor) for use in imaging applications. In some embodiments, the sensor component 1007 may also include an acceleration sensor, a gyro sensor, a magnetic sensor, a pressure sensor, or a temperature sensor.

The communication component 1008 is configured to facilitate wired or wireless communication between the terminal 1000 and other devices. The terminal 1000 may access a wireless network based on a communication standard such as 2G, 3G, 4G, 5G or a combination thereof. In an illustrative embodiment, the communication component 1008 receives broadcast signals or broadcast-associated information from an external broadcast management system via a broadcast channel. In an illustrative embodiment, the communication component 1008 also includes a near field communication (NFC) module to facilitate short range communication. For example, the NFC module may be implemented based on radio frequency identification (RFID) technology, infrared data association (IrDA) technology, ultra-wide band (UWB) technology, Bluetooth (BT) technology and other technologies.

In an illustrative embodiment, the terminal 1000 may be implemented by one or more application specific integrated circuits (ASICs), digital signal processors (DSPs), digital signal processing devices (DSPDs), programmable logic devices (PLDs), field programmable gate arrays (FPGA), controllers, microcontrollers, microprocessors, or other electronic components, so as to perform the above method.

Based on the same inventive concept, the embodiments of the present disclosure provide a network device, which is consistent with the network device in one or more of the above embodiments.

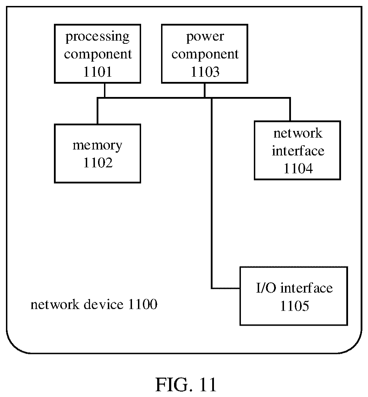

FIG. 11 is a block diagram of a network device according to the embodiments of the present disclosure. As shown in FIG. 11, a network device 1100 may include a processing component 1101, which further includes one or more processors, and a memory resource represented by a memory 1102 for storing instructions that may be executed by the processing component 1101, such as an application program. The application program stored in memory 1102 may include one or more modules, each corresponding to a set of instructions. In addition, the processing component 1101 is configured to execute instructions so as to implement the method for performing LCP on the network device.

The network device 1100 may also include a power component 1103 configured to perform power management of the network device 1100, a wired or wireless network interface 1104 configured to connect the network device 1100 to a network, and an input/output (I/O) interface 1105. The network device 1100 may operate an operating system stored in the memory 1102, such as Windows Server^{™}, Mac OS X^{™}, Unix^{™}, Linux^{™}, FreeBSD^{™} or similar operating systems.

Based on the same inventive concept, the embodiments of the present disclosure also provide a computer-readable storage medium for storing computer-executable instructions. When the computer-executable instructions are executed by a processor in a computer, the method for performing LCP on a terminal side or a network device side in one or more of the above embodiments is implemented.

Based on the same inventive concept, the embodiments of the present disclosure also provide a computer program or a computer program product. When the computer program product is executed on a computer, the computer is caused to implement the method for performing LCP on a terminal side or a network device side in one or more of the above embodiments.

Other embodiments of the present disclosure will be apparent to those skilled in the art from consideration of the specification and practice of the present disclosure disclosed here. This application is intended to cover any variations, uses, or adaptations of the present disclosure following the general principles of the disclosure and including common knowledge or conventional technical means in the art that are not disclosed herein. It is intended that the specification and examples be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for performing logical channel prioritization (LCP), performed by a terminal, comprising:
when assembly of first data is triggered by a first buffer status report (BSR), raising a logical channel priority of a first logical channel corresponding to the first data, wherein the first BSR is associated with delay information of the first data.

2. The method of claim 1, wherein the first data is uplink data with an urgent scheduling requirement.

3. The method of claim 2, wherein the first data is uplink data whose remaining packet delay budget (PDB) is less than a first threshold.

4. The method of any one of claims 1 to 3, wherein the first data is a data packet or a data packet set.

5. The method of claim 1, wherein raising the logical channel priority of the first logical channel corresponding to the first data comprises:
raising the logical channel priority of the first logical channel to a maximum priority level; or
raising the logical channel priority of the first logical channel to a preset priority level.

6. The method of claim 5, in response to raising the logical channel priority of the first logical channel to the preset priority level, the method further comprising:
receiving first indication information sent by a network device, wherein the first indication information is configured to indicate the preset priority level.

7. The method of claim 1, further comprising:
receiving a first instruction sent by a network device, wherein the first instruction is configured to instruct the terminal to raise the logical channel priority of the first logical channel when transmitting the first data;
wherein raising the logical channel priority of the first logical channel corresponding to the first data comprises:
in response to the first instruction, raising the logical channel priority of the first logical channel corresponding to the first data.

8. The method of claim 7, wherein the first instruction is configured to schedule an uplink grant.

9. The method of claim 1, further comprising:
in a process of performing the LCP on the first logical channel, not restricting transmission of the first data using a token bucket.

10. The method of claim 1, further comprising:
maintaining the logical channel priority of the first logical channel at a raised logical channel priority before transmission of the first data is completed.

11. A method for performing logical channel prioritization (LCP), performed by a terminal, comprising:
when assembly of first data is triggered by a first buffer status report (BSR), determining a first logical channel corresponding to the first data, wherein the first BSR is associated with delay information of the first data; and
prioritizing transmission of the first data of the first logical channel when the LCP is performed on the first logical channel.

12. The method of claim 11, wherein the first data is uplink data with an urgent scheduling requirement.

13. The method of claim 12, wherein the first data is uplink data whose remaining packet delay budget (PDB) is less than a first threshold.

14. The method of any one of claims 11 to 13, wherein the first data is a data packet or a data packet set.

15. The method of claim 11, wherein prioritizing the transmission of the first data of the first logical channel comprises:
prioritizing the transmission of the first data of the first logical channel among a plurality of logical channels with the same logical channel priority; or
prioritizing the transmission of the first data of the first logical channel among a plurality of logical channels with different logical channel priorities.

16. The method of claim 11, further comprising:
receiving a second instruction sent by a network device, wherein the second instruction is configured to instruct the terminal to prioritize the transmission of the first data of the first logical channel;
wherein prioritizing the transmission of the first data of the first logical channel when the LCP is performed on the first logical channel comprising:
in response to the second instruction, prioritizing the transmission of the first data of the first logical channel when the LCP is performed on the first logical channel.

17. The method of claim 11, further comprising:
in a process of performing the LCP on the first logical channel, not restricting the transmission of the first data using a token bucket.

18. The method of claim 11, further comprising:
prioritizing the transmission of the first data of the first logical channel before the transmission of the first data is completed.

19. A method for performing logical channel prioritization (LCP), performed by a terminal, comprising:
when assembly of a first data assembly packet is triggered by a first buffer status report (BSR), not restricting transmission of the first data of a first logical channel using a token bucket.

20. The method of claim 19, wherein not restricting the transmission of the first data of the first logical channel using the token bucket comprises:
prioritizing mapping of the first data of the first logical channel to an uplink grant; or
updating a value of a prioritized bit rate (PBR) of the first logical channel to infinity; or
transmitting the first data until the uplink grant is exhausted.

21. A method for performing logical channel prioritization (LCP), performed by a network device, comprising:
receiving a first buffer status report (BSR) sent by a terminal, wherein the first BSR is associated with delay information of first data; and
sending a first instruction to the terminal, wherein the first instruction is configured to instruct the terminal to raise a logical channel priority of a first logical channel when transmitting the first data.

22. The method of claim 21, wherein the first data is uplink data with an urgent scheduling requirement.

23. The method of claim 21, wherein the first data is uplink data whose remaining packet delay budget (PDB) is less than a first threshold.

24. The method of any one of claims 21 to 23, wherein the first data is a data packet or a data packet set.

25. The method of claim 21, wherein the first instruction is configured to schedule an uplink grant.

26. The method of claim 21, wherein the first instruction is configured to instruct the terminal to raise the logical channel priority of the first logical channel to a maximum priority level or a preset priority level when transmitting the first data.

27. The method of claim 21, in response to the first instruction being configured to instruct the terminal to raise the logical channel priority of the first logical channel to the preset priority level when transmitting the first data, the method further comprising:
sending first indication information to the terminal, wherein the first indication information is configured to indicate the preset priority level.

28. A method for performing logical channel prioritization (LCP), performed by a network device, comprising:
receiving a first buffer status report (BSR) sent by a terminal, wherein the first BSR is associated with delay information of first data; and
sending a second instruction to the terminal, wherein the second instruction is configured to instruct the terminal to prioritize transmission of the first data of a first logical channel.

29. The method of claim 28, wherein the first data is uplink data with an urgent scheduling requirement.

30. The method of claim 29, wherein the first data is uplink data whose remaining packet delay budget (PDB) is less than a first threshold.

31. The method of any one of claims 28 to 30, wherein the first data is a data packet or a data packet set.

32. The method of claim 28, wherein the second instruction is configured to instruct the terminal to prioritize the transmission of the first data of the first logical channel among a plurality of logical channels with the same logical channel priority; or
the second instruction is configured to instruct the terminal to prioritize the transmission of the first data of the first logical channel among a plurality of logical channels with different logical channel priorities.

33. A communication device, comprising:
a processing module, configured to: when assembly of first data is triggered by a first buffer status report (BSR), raise a logical channel priority of a first logical channel corresponding to the first data, wherein the first BSR is associated with delay information of the first data; and perform logical channel prioritization (LCP) on the first logical channel according to a raised logical channel priority.

34. A communication device, comprising:
a processing module, configured to: when assembly of first data is triggered by a first buffer status report (BSR), determine a first logical channel corresponding to the first data, wherein the first BSR is associated with delay information of the first data; and when logical channel prioritization (LCP) is performed on the first logical channel, prioritize transmission of the first data of the first logical channel.

35. A communication device, comprising:
a processing module, configured to: when assembly of first data is triggered by a first buffer status report (BSR), not restrict transmission of the first data of a first logical channel using a token bucket.

36. A communication device, comprising:
a receiving module, configured to receive a first buffer status report (BSR) sent by a terminal, wherein the first BSR is associated with delay information of first data; and
a sending module, configured to send a first instruction to the terminal, wherein the first instruction is configured to instruct the terminal to raise a logical channel priority of a first logical channel when transmitting the first data.

37. A communication device, comprising:
a receiving module, configured to receive a first buffer status report (BSR) sent by a terminal, wherein the first BSR is associated with delay information of first data; and
a sending module, configured to send a second instruction to the terminal, wherein the second instruction is configured to instruct the terminal to prioritize transmission of the first data of a first logical channel.

38. A communication device, comprising:
an antenna;
a memory; and
a processor connected to the antenna and the memory, configured to execute computer-executable instructions stored in the memory, control transmission and reception of the antenna, and implement the method of any one of claims 1 to 32.

39. A computer storage medium for storing computer-executable instructions, wherein when the computer-executable instructions are executed by a processor of a communication device, the method of any one of claims 1 to 32 is implemented.

40. A communication system, comprising:
a terminal, configured to perform the method of any one of claims 1 to 27; and
a network device, configured to perform the method of any one of claims 28 to 32.
